Europäisches Patentamt

**European Patent Office**

**Office européen des brevets**

(11) Numéro de publication: **0 263 766**
**B1**

(12) **FASCICULE DE BREVET EUROPEEN**

(45) Date de publication du fascicule du brevet:
**25.07.90**

(21) Numéro de dépôt: **87420267.4**

(22) Date de dépôt: **01.10.87**

(51) Int. Cl.⁵: **B23Q 1/16,** B23Q 1/28,
B23Q 3/154, F16M 11/14

(54) Dispositif porte-outil pour machine d'usinage.

(30) Priorité: **07.10.86 FR 8614079**

(43) Date de publication de la demande:
**13.04.88 Bulletin 88/15**

(45) Mention de la délivrance du brevet:
**25.07.90 Bulletin 90/30**

(84) Etats contractants désignés:
**AT DE ES FR GB IT SE**

(56) Documents cités:
**DE-A- 2 644 380**
**FR-A- 1 555 211**
**FR-A- 2 109 150**
**FR-A- 2 535 479**
**FR-A- 2 535 479**
**US-A- 2 796 788**
**US-A- 4 398 350**
**US-A- 4 461 463**

(73) Titulaire: **SOCIETE D'ETUDE ET DE REALISATION ET DE DIFFUSION INDUSTRIELLES SERDI, Avenue des Vieux Moulins 23, Annecy (Haute-Savoie)(FR)**

(72) Inventeur: **Harmand, Pierre, 47, route de Vovray, F-74000 Annecy(FR)**

(74) Mandataire: **Guerre, Dominique et al, Cabinet Germain et Maureau Le Britannia-Tour C 20 Boulevard Eugéne Dérnelle BP 3011, F-69392 Lyon Cédex 03(FR)**

ACTORUM AG

## Description

La présente invention concerne un dispositif porte-outil pour machine d'usinage (voir par example le brevet US-A 4 461 463), et plus particulièrement des broches porte-outils pour rectifieuses de sièges de soupape.

Conformément au brevet EP - B 22 796, on a décrit une broche porte-outil, solidaire d'une table mobile dans un plan selon deux directions perpendiculaires, comportant :
- une broche porte-outil ;
- un moyen d'orientation angulaire de la broche par rapport au plan, constitué par un fourreau avec deux portées, l'une supérieure et l'autre inférieure , de sphéricité convexe, et par un boitier avec un siège inférieur de sphéricité concave complémentaire ;
- le fourreau pouvant être successivement bloqué et débloqué par rapport au boitier, grâce à un siège supérieur, mobile par rapport au boitier ;
- et des moyens pour sustenter sans frottement le fourreau par rapport au boitier, pendant la phase de déblocage, sous la forme d'un flux gazeux formant coussin entre le fourreau et les sièges précités.

Une telle broche, en raison de sa faible inertie, peut être positionnée de manière précise, et à ce titre, elle a démontré son efficacité dans de nombreuses applications, en particulier pour des machines de rectification de sièges de soupape.

Ceci dit, une telle broche apparaît plus adaptée à l'usinage de pièces à l'unité, qu'à des opérations ou travaux en grande série, en raison des limitations explicitées ci-après.

Tout d'abord, la technique du coussin gazeux est généralement mise en oeuvre, en milieu industriel, en organisant un circuit ouvert d'air, entre le fourreau et le boitier, à partir d'une source d'air comprimé et de fuites calibrées vers l'extérieur. De ce fait, si l'on renonce à un circuit fermé d'un gaz approprié (par exemple azote), il apparaît difficile d'obtenir un coussin d'épaisseur constante, en particulier à cause des variations de température affectant l'air de sustentation, lesquelles modifient la pression et/ou le débit de ce dernier. De plus, la présence de condensats ou d'humidité dans l'air comprimé disponible nécessite de recourir à des dispositifs de filtration ou condensation supplémentaires. Pour toutes ces raisons, en milieu industriel, la maîtrise du coussin d'air au niveau critique entre fourreau et boitier, apparaît en pratique difficile.

Ensuite, la broche associée à son mécanisme d'entraînement en rotation représente une masse relativement importante . L'inertie de cet ensemble, en relation avec l'absence de frottement notable entre le fourreau et le boitier, génère au moment du positionnement de la broche par rapport à la pièce à usiner, des oscillations de cette dernière, d'amplitude décroissante, jusqu'à atteindre la position d'équilibre recherchée; d'où un temps relativement long de mise en place de la broche, souvent incompatible avec des opérations d'usinage en série. Ou, si l'usinage, par exemple la rectification, commence avant d'obtenir la position d'équilibre de la broche, l'usinage ne pourra aboutir à la précision recherchée.

La présente invention se propose de remédier à tous ces inconvénients, et en particulier, pour une broche porte-outil telle que définie précédemment, elle a recherché un autre mode de sustentation du fourreau par rapport au boitier, autorisant des opérations d'usinage en grande série, en milieu industriel.

Selon l'invention, et de manière générale, des moyens de génération d'un champ magnétique, par exemple un aimant, sont associés au siège inférieur du boitier, et des moyens de commande permettent de repousser la portée inférieure du fourreau, dans la position de réglage angulaire de la broche, et d'attirer la même portée dans une position de travail de ladite broche.

Ces moyens, appliqués à la sustentation d'un organe sphérique, sont en soi connus, et ont par exemple été dé crits par le brevet US-A-4461463, pour orienter angulairement une surface plane par rapport à une autre surface plane de référence, et par le brevet FR-A-2535479, pour orienter selon trois degrés de liberté deux parties d'un véhicule spatial, l'une par rapport à l'autre.

L'application de moyens similaires à une broche porte-outil selon l'invention, confére à cette dernière des résultats ou performances significatifs, en soi nouveaux, et inattendus.

Grâce à la présente invention, l'agencement mécanique de la broche porte-outil devient beaucoup plus simple. Il n'est plus nécessaire en effet de recourir à un siège supérieur, mobile à la manière d'un piston par rapport au boitier, pour bloquer le fourreau et donc la broche, dans leurs positions de travail. Il suffit pour ce faire, d'interrompre le champ magnétique, ou de l'inver ser, pour "coller" le fourreau contre son siège.

Par ailleurs, en modulant le champ magnétique à l'inverse des oscillations du fourreau et de la broche, il devient possible de stabiliser cette dernière immédiatement dans sa position d'équilibre.

De la même manière, il devient possible de régler l'entrefer entre le fourreau et le siège, et donc d'adapter l'épaisseur du coussin entre ces deux pièces, à la nature de l'usinage à effectuer.

Egalement, selon l'invention, on prévoit d'intégrer les moyens d'entraînement en rotation de la broche, à l'intérieur du boitier, sous la forme d'un stator électrique disposé au niveau du siège ou à l'intérieur du fourreau, la broche ou le fourreau lié en rotation à la broche, formant rotor.

Par application de toutes les caractéristiques de la présente invention, on obtient au total un dispositif porte-outil dont l'agencement mécanique devient d'une grande simplicité.

la présente invention est maintenant décrite, dans le cadre d'une broche porte-outil pour rectifieuse de sièges de soupape, par référence aux dessins annexés dans lesquels :

- la figure 1 montre schématiquement un dispositif porte-outil selon l'invention ;
- la figure 2 montre une broche porte-outil selon un premier mode de réalisation de l'invention ;
- la figure 3 montre une broche selon un deuxième mode de réalisation de l'invention.

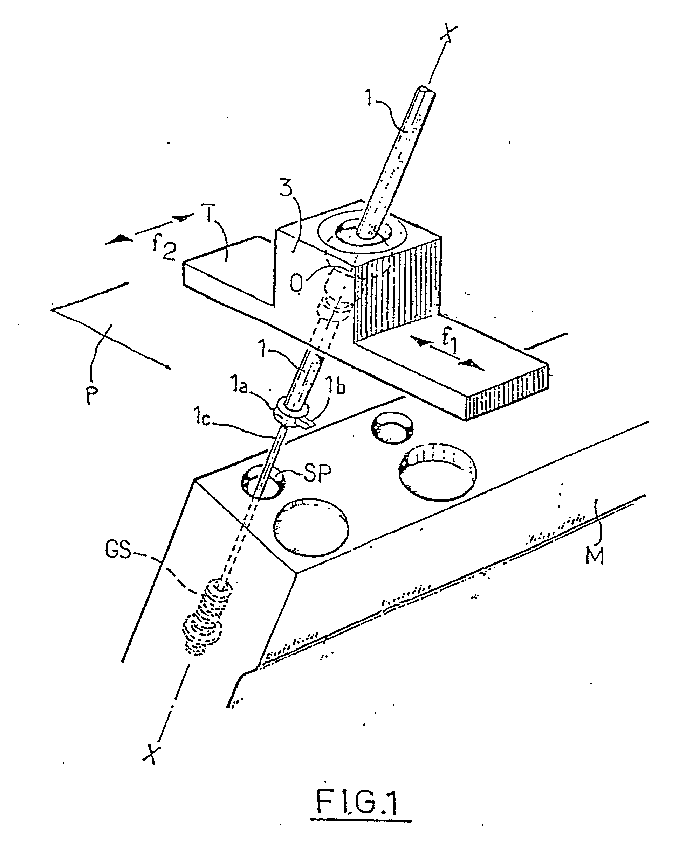

Comme on le voit sur la figure 1, cette broche (1) pourvue du porte-outil (1a), auquel est fixé l'outil (1b) doit prendre toute position convenable pour que la tige pilote (1c) qui prolonge le porte-outil puisse s'introduire dans le guide (GS) de la soupape du moteur (M) dont on veut rectifier un siège (SP) de soupape.

D'une manière classique, la tête porte-broche (ici référencée par celle du boitier (3)) est soumise aux déplacements alternatifs, dans un plan horizontal (P) selon les flèches (f1) et (f2), de la table (T) dont elle est solidaire.

Ces déplacements ont pour objet d'amener le centre (0) de la broche de manière que son axe (x-x) soit dans le prolongement de l'axe du guide (GS) du guide de la soupape du moteur (M) dont on veut rectifier le siège (SP).

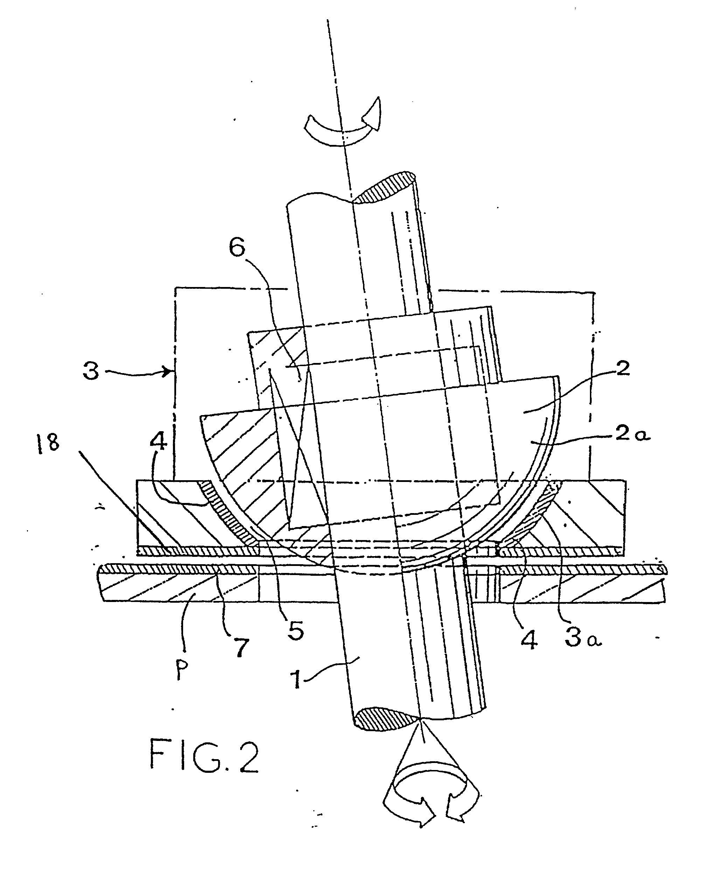

Par référence à la figure 2, le dispositif selon l'invention, outre la broche (1) porte-outil comporte un moyen de guidage et d'orientation angulaire de cette dernière par rapport au plan (P), consitué par :
- un fourreau (2) ayant à sa partie inférieure une portée (2a) de sphéricité convexe, avec un perçage axial, assurant le libre passage et en translation et en rotation de la broche (1) ;
- un boitier (3), représenté pour partie de manière schématique, ayant à sa partie inférieure un siège (3a) de sphéricité concave complémentaire.

Des moyens (4) générant un champ magnétique sont associés au siège (2a), par exemple sous la forme d'un berceau magnétique sphérique, et permettent, par des moyens de commande non représentés, d'une part de repousser le fourreau et la broche, dans la position de déblocage, du fourreau par rapport au boitier, pour positio nner angulairement la broche, et d'autre part d'attirer ou bloquer le fourreau (2) contre le siège (3), dans la position de blocage du fourreau par rapport au boitier, pour commencer le travail de rectification, une fois la broche positionnée.

S'agissant des moyens de génération d'un champ magnétique, il peut s'agir d'aimants permanents ou d'électro-aimants, par rapports auxquels le fourreau se comporte de manière naturelle ou induite en aimant de polarité identique, pendant la phase de déblocage, ou de polarité contraire, pendant la phase de blocage.

Le coussin (5) sphérique magnétique autorise, pendant la phase de déblocage, tout mouvement angulaire de la broche, sans frottement, inscrit à l'intérieur d'un cone. Le réglage de l'épaisseur du coussin magnétique, de manière différentielle de part et d'autre de la broche, permet d'obtenir des décentrages contrôlés de la broche (1).

Toujours selon l'invention, au lieu d'entraîner la broche en rotation par l'extérieur du boitier, on prévoit des moyens électriques internes, sous la forme d'un stator (6) intégré au fourreau (2), dont la broche (1) constitue le rotor.

Par ailleurs, la table (T), ou ce qui revient au même le boitier (3), sont sustentés l'un par rapport à l'autre, sans frottement, par un champ magnétique généré de manière naturelle ou artificielle par un aimant plan (7) repoussant un autre aimant plan (18), naturel ou induit, disposé en vis-à-vis sur le boitier (3).z

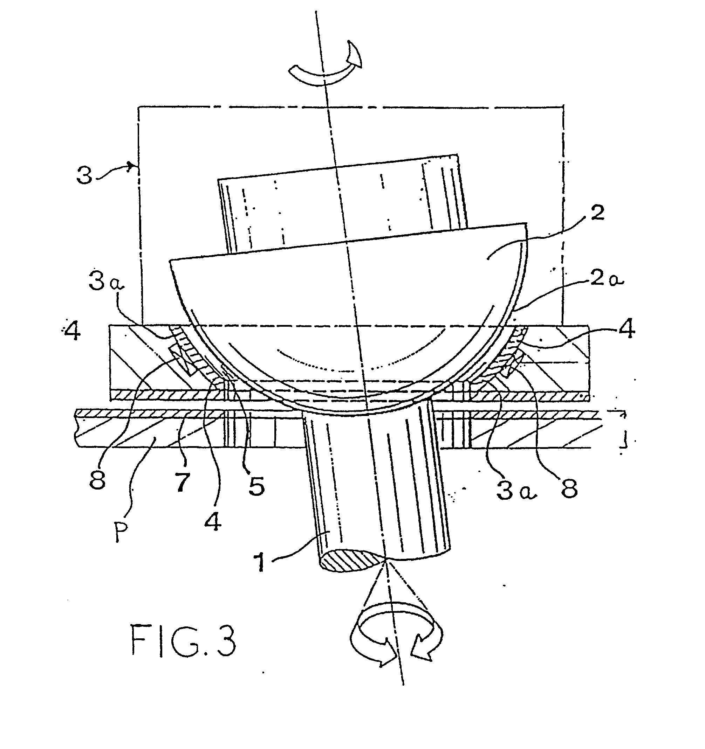

Le mode d'exécution selon la figure 3 diffère du précédent, en ce que d'une part la broche (1) est solidaire en rotation du fourreau (2), et d'autre part des moyens électriques internes d'entraînement en rotation sont prévus sous la forme d'un stator (8), qui peut être distinct ou non du moyen (4) de génération magnétique vers le fourreau (2), le fourreau associé à la broche constituent le rotor.

Selon ce mode d'exécution, le fourreau (2) et le siège (3a) fonctionnent à la manière d'un moteur électrique à palier magnétique, étant entendu que le fourreau est bloqué en position angulaire par un réglage approprié et différencié du champ magnétique généré par le moyen (4), de part et d'autre de la broche (2).

## Revendications

1/ Dispositif porte-outil pour machine d'usinage, solidaire d'une table (T) mobile dans un plan (P) selon au moins une direction, comportant une broche (1) porte-outil, un moyen de guidage et d'orientation angulaire de la broche (1) par rapport au plan (P), constitué par un fourreau (2) avec une portée (2a) inférieure de sphéricité convexe et un boitier (3) avec un siège (3a) de sphéricité concave complémentaire, le fourreau (2) pouvant être successivement bloqué et débloqué par rapport au boitier (3), des moyens étant prévus pour sustenter sans frottement le fourreau (2) par rapport au boitier (3), caractérisé en ce que des moyens (4) de génération d'un champ magnétique, sont associés au siège (2a) inférieur du boitier (3), et des moyens de commande permettent de repousser la portée (2a) inférieure du fourreau (2), dans la position de réglage angulaire de la broche (1), et d'attirer la même portée (2a) dans une position de travail de ladite broche (1).

2/ Dispositif selon la revendication 1, la broche (1) étant libre en rotation par rapport au fourreau (2), caractérisé en ce que des moyens électriques internes d'entraînement en rotation sont prévus, sous la forme d'un stator (6) intégré au fourreau (2), dont la broche (1) constitue le rotor.

3/ Dispositif selon la revendication 1, caractérisé en ce que d'une part, la broche (1) est solidiare en rotation du fourreau (2), et d'autre part des moyens électriques internes d'entraînement en rotation sont prévus sous la forme d'un stator (8), distinct ou non du moyen (4) de génération du champ magnétique, le fourreau (2) associé à la broche (1) constituant le rotor.

4/ Dispositif selon l'une quelconque des revendications précédentes, caractérisé en ce que la table (T) est sustentée par rapport au plan (P), par champ magnétique.

## Patentansprüche

1. Werkzeugträger für Werkzeugmaschinen, der mit einem in einer Ebene (P) entlang mindestens einer Richtung beweglichen Tisch (T) einstückig ist, mit einer Werkzeugträgerspindel (1), mit einem Mittel zum Führen und zum Winkel-Einstellen der Spindel (1) in bezug auf die Ebene (P), wobei die Spindel (1) einen Gleitkopf (2) mit einem unteren Lagerelement (2a) von konvexer Kugelgestalt sowie ein Gehäuse (3) mit einem Lagersitz (3a) von dazu komplementärer, konkaver Kugelgestalt umfaßt, und der Gleitkopf (2) nacheinander relativ zum Gehäuse (3) blockiert und wieder gelöst werden kann, wobei ferner Mittel vorgesehen sind, um den Gleitkopf (2) reibungsfrei gegenüber dem Gehäuse (3) zu lagern, dadurch gekennzeichnet, daß Mittel (4) zum Erzeugen eines Magnetfeldes mit dem unteren Lagerelement (2a) des Gehäuses (3) zusammenwirken, und daß Steuermittel ein Abstoßen des unteren Lagerelementes (2a) des Gleitkopfes (2) in die Stellung zum Winkel-Einstellen der Spindel (1) sowie ein Anziehen desselben Lagerelementes (2a) in eine Arbeitsstellung der Spindel (1) gestatten.

2. Werkzeugträger nach Anspruch 1, bei dem die Spindel (1) relativ zum Gleitkopf (2) frei drehbar ist, dadurch gekennzeichnet, daß interne elektrische Dreh-Antriebsmittel vorgesehen sind, in Gestalt eines Stators (6), der in den Gleitkopf (2) integriert ist, dessen Spindel (1) den Rotor darstellt.

3. Werkzeugträger nach Anspruch 1, dadurch gekennzeichnet, daß einerseits die Spindel (1) drehstarr mit dem Gleitkopf (2) verbunden ist, und daß andererseits interne elektrische Dreh-Antriebsmittel vorgesehen sind, in Gestalt eines Stators (8), der zugleich die Mittel zum Erzeugen eines Magnetfeldes bildet, oder auch nicht, wobei der mit der Spindel (1) verbundene Gleitkopf (2) den Rotor darstellt.

4. Werkzeugträger nach einem der vorhergehenden Ansprüche, dadurch gekennzeichnet, daß der Tisch (T) gegenüber der Ebene (P) mittels eines Magnetfeldes gelagert ist.

**Claims**

1. Toolholder device for a machine tool, integral with a table (T) movable in a plane (P) in at least one direction and comprising a toolholder spindle (1) and a means for the guidance and angular orientation of the spindle (1) relative to the plane (P), formed by a sleeve (2) with a lower bearing surface (2a) of convex sphericity and a housing (3) with a seat (3a) of matching concave sphericity, the sleeve (2) being capable of being successively locked and released relative to the housing (3), means being provided for supporting the sleeve (2) relative to the housing (3) without friction, characterized in that means (4) for generating a magnetic field are associated with the lower seat (2a) of the housing (3), and control means make it possible to push the lower bearing surface (2a) of the sleeve (2) into the position of angular adjustment of the spindle (1) and draw the same bearing surface (2a) into a working position of the said spindle (1).

2. Device according to Claim 1, the spindle (1) being free in terms of rotation relative to the sleeve (2), characterized in that internal electrical means for driving in rotation are provided in the form of a stator (6) incorporated in the sleeve (2), the spindle (1) of which constitutes the rotor.

3. Device according to Claim 1, characterized in that, on the one hand, the spindle (1) is integral with the sleeve (2) in terms of rotation and, on the other hand, internal electrical means for driving in rotation are provided in the form of a stator (8) separate or not from the means (4) for generating the magnetic field, the sleeve (2) associated with the spindle (1) forming the rotor.

4. Device according to any one of the preceding claims, characterized in that the table (T) is supported relative to the plane (P) by means of the magnetic field.

F I G.1

FIG.2

FIG.3